(19) Europäisches Patentamt

European Patent Office

Office européen des brevets

(11) **EP 1 947 471 B1**

(12) **EUROPEAN PATENT SPECIFICATION**

(45) Date of publication and mention
of the grant of the patent:
**13.10.2010 Bulletin 2010/41**

(51) Int Cl.:
**G01S 5/18** *(2006.01)*    **G01S 15/87** *(2006.01)*

(21) Application number: **07000806.5**

(22) Date of filing: **16.01.2007**

(54) **System and method for tracking surround headphones using audio signals below the masked threshold of hearing**

Vorrichtung und Verfahren zum Verfolgen von surround Kopfhörern unter Verwendung von Audiosignalen unterhalb der maskierten Hörschwelle

Système et procédé de poursuite de casques surround utilisant des signaux audio en dessous du seuil masqué d'audibilité

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**23.07.2008 Bulletin 2008/30**

(73) Proprietor: **Harman Becker Automotive Systems GmbH**
**76307 Karlsbad (DE)**

(72) Inventors:
• **Azizi, Seyed-Ali**
**80797 München (DE)**
• **Münch, Tobias**
**75334 Straubenhardt (DE)**

(74) Representative: **Grünecker, Kinkeldey, Stockmair & Schwanhäusser Anwaltssozietät**
**Leopoldstrasse 4**
**80802 München (DE)**

(56) References cited:
**EP-A- 1 359 437        WO-A-01/10065**
**WO-A-2004/057361        WO-A1-01/34264**
**WO-A2-2005/032209        US-A- 5 495 534**

• **VALLIDIS, NICHOLAS MICHAEL: "WHISPER: A Spread Spectrum Approach to Occlusion in Acoustic Tracking" 2002, VALLIDIS , CHAPEL HILL , XP002435106 * abstract; figures 4.1,6.1 * * pages 29-44 * * pages 60-96 ***

**EP 1 947 471 B1**

**Description**

The present invention relates to a tracking system and a method for determining the spatial orientation of a moveable object, in particular of a head wearing headphones simulating a surround sound reproduction of audio data. More specifically, the present invention relates to tracking of a moveable object based on transmission time measurements of signals between the movable objects and a reference location.

In recent years, more and more advanced technologies of providing a reproduction of audio data in surround sound quality have emerged. Originally developed for cinematography, now such techniques are increasingly employed in a home environment. Analogue as well as digital surround techniques are available. While analogue techniques are still widespread in pure audio environment today, digital techniques are mostly used in the digital video environment.

For surround reproduction, in addition to the conventional left and right front loudspeakers known from the stereo system, a front centre loudspeaker, a pair of left and right rear loudspeakers, and a "subwoofer" are used. A common version of surround sound is the 5.1 technique. In the 5.1 technique, there are provided 6 total channels of sound, wherein 5 channels are foreseen for normal range speakers (right-front, centre, left-front, right-rear and left-rear) and one channel for the LFE (low frequency effect), or subwoofer speaker. The subwoofer is a type of loudspeaker dedicated to the reproduction of lowest frequencies, typically from about 20Hz to 100Hz. It is difficult for small loudspeakers to reproduce frequencies below 40Hz. Therefore, it is advantageous to use one loudspeaker intended specifically for this task.

Besides the 5.1 technique comprising 6 separate channels, also techniques are known, wherein a smaller number of independent channels is sufficient. For instance, in an early surround version, the centre loudspeaker is fed by a channel comprising those signal portions that are contained in both conventional audio channels (left and right) in phase coherency, and the left and right rear speakers are fed from one channel with inverted phases. On the other hand, recent developments, such as 6.1 and 7.1 techniques, employ an even larger number of channels.

The perception of surround sound reproduced from audio data with the help of a surround reproduction system is generally based on the same principles that we employ for localizing a sound source in space in every day life. Namely, a sound signal from a particular sound source arrives at both ears of a person at different times and nonuniform (i.e. with different amplitudes and phases). Additionally, the outer part of a human ear influences the frequency of incoming sound signals dependent on the direction of the incoming signal. These effects are used for the location of a sound source.

In the particular situation of surround sound reproduction, for instance in the home theatre system, the ears receive both direct sound from each speaker and multiple reflections contributed by the rooms surfaces and furnishings. By the time it reaches the ears, the sound from each speaker has acquired a unique signature. Taken together, these signatures cue the brain as to the size and the acoustical properties of the room, the speaker's locations and the spatial properties of the original sound.

If it is desired to reproduce surround sound with the help of headphones, a problem arises. In case of hearing via headphones, the effects of amplitude and phase shifting as well as frequency filtering mentioned above that are necessary for location of a sound source and therefore for generating a surround hearing impression are generally eliminated. Instead, in case of headphones, a sound source is located directly at every ear. Therefore, no natural surround sound impression can arise.

In order to compensate for this drawback of headphones as compared with surround reproduction using loudspeakers distributed in a room, technologies have been developed that preprocess the audio signals to be fed to headphones in such a way that the amplitude and phase shifts arising in a natural room are reproduced. Thereby, surround sound can be simulated for reproduction with stereo headphones. With the help of digital signal filtering technology, the sonic signature of a corresponding speaker properly placed in a carefully defined acoustic environment is imparted to each audio channel. This means, that up to five virtual loud speakers are created in a virtual room. In case of 5.1 channel reproduction, the subwoofer signal is mixed into the left and right channels in equal proportions. A processor combines all this information into two encoded channels for feeding each of the ears of a person, via conventional stereo headphones. The result is rather natural listening sensation, simulating surround reproduction. Such a simulation is also known under the term "virtual acoustics". A further improvement may be achieved with special loudspeakers including two sound sources per ear having a slightly shifted location with respect to each other.

However, a further problem arises in the case of reception of simulated surround sound via headphones. Namely, if the head of a person turns while listening simulated surround sound via headphones, the simulated sound field turns together with the head, in contrast to the situation in conventional surround sound in a room, wherein the sound field remains fixed in the room when the head is turned. This leads to an unnatural and disturbed perception of the sound field.

The arising distortion effect is, for instance, especially relevant in case of combined audio / video reproduction. While a person listening surround sound via headphones and at the same time viewing the corresponding video sequences on a video screen would expect the corresponding amendment of the sound perception, if he or she slightly moves the head, in case of headphones, simulating surround sound no change of the sound field occurs. Therefore, the perceived surround sound differs from what the user would expect. If, for instance, the video screen shows a musician playing at a central position in front of the viewer, and the user turns his or her head to the right, he or she would expect the sound to come now from the left hand side. However, the virtual sound simulated by the headphones remains coming from in front of the person.

In order to compensate for the effects described above, tracking systems have been developed.

A general acoustic tracking system, called "Whisper", is described in the dissertation of N.N. Validis, "Whisper: A Spread Spectrum Approach to Occlusion in Acoustic Tracking", Chapel Hill, North Carolina, 2002. "Whisper" is particularly suitable for overcoming occlusion problems by employing a spread spectrum signal including low frequency components undergoing diffraction. "Whisper" particularly aims at determining the positions of hands and feet of a user. A one-dimensional version as well as a three-dimensional version are outlined.

A method for determining a position of a user of an acoustic reproducing apparatus is described in patent document EP 1 359 437 A1. The acoustic reproducing apparatus comprises at least two loudspeakers and a microphone. A suitable excitation signal is emitted by the at least two speakers. A response is detected by the microphone. Position detection of the user is based on the fact that different transmission paths are possible for a signal between loudspeaker and microphone (in particular: a direct path and a path including reflection from the user). As excitation signals, broadband audio signals, such as "maximum length sequence(s) signals", are generally employed. The method aims to achieve "crosstalk cancellation" with a particularly simple hardware basis.

Head tracking systems are based on continuously acquiring the movement of the head (first of all the orientation, possibly also the position) by measurement. With the help of the acquired information, an additional pre-processing of the sound data fed to the headphones is performed. The additional pre-processing reflects the movements of the head detected by measurement such that the simulated three-dimensional sound field is perceived as fixed in space although the head permanently moves.

Conventional head tracking systems employed in the art can be classified as follows:

The first class of tracking systems employs a physical angle measurement device, such as an angular velocity sensor, that is positioned at the headphones for directly measuring a rotation angle of the head. Such a system is described for instance in European patent application EP-1 176 848 A2.

The second class of tracking systems employs transmitters fixed at the headphones. The transmitters continuously emit signals, which are received at detectors that are fixed in the room, wherein the user is located. The detectors are connected to a processing unit that is capable of calculating parameters defining orientation and position of the head by employing triangulation on the basis of evaluating the transition time between transmitters and detectors.

The employed signals emitted by the transmitters are preferably ultrasonic signals, however, also infrared or radio wave signals are possible. A tracking system according to the second class, however in the different context of a 3-dimensional mouse for virtual reality applications, is described in the international patent application WO 92 /07 346.

In order to completely determine orientation and position of the head at least three transmitters in a three angular arrangement fixed with respect to each other, and a respective arrangement of detectors is required. In view of a reciprocity of the transmission of ultrasonic or electromagnetic signals, a person skilled in the art is aware that the positions of transmitters and detectors can be exchanged. Accordingly, detectors can be arranged at the headphones, while the transmitters are fixed with respect to the room, wherein the user is located.

Examples of tracking systems for headphones in an audio environment are described in a documents WO 2005/032209 and US 5,495,534. Time-of-flight measurements of ultrasound signals with a source fixed in the space and detectors located at the headphones are performed in order to determine at least an orientation of the headphones with respect to the fixed position.

It is a drawback of both classes of conventional tracking systems mentioned above that the required hardware effort is rather large. This is obvious for the first class of tracking systems, as these tracking systems require a mechanical angular detecting system to be mounted at the headphones. Moreover, an electronic signal must be generated out of the mechanical detection result, and the electronic signal must be provided to a processing unit for evaluation in order to simulate the appropriate amendment to the sound field.

However, the hardware effort required is rather large also for the second class of conventional tracking systems outlined above. These tracking systems are based on transmission time measurements of non-audio-signals. Ultrasonic signals as well as electromagnetic signals (i.e. infrared or radio wave) have to be specifically generated, detected and processed. As generation, detection and processing of such signals is not inherent in an audio system, employing these systems for tracking requires additional specific hardware components, which result in considerable additional costs.

The present invention aims to provide an improved tracking system and tracking method for a movable object with reduced hardware effort.

This is achieved by the features of the independent claims. Further features and advantages of the present invention are the subject matter of dependent claims.

It is the particular approach of the present invention to enable tracking of a moveable object on the basis of transmission time measurement by employing a sonic signal in the audible frequency range. The approach of the present invention is particularly suitable for use in the environment of an audio system, such as for tracking of headphones for an improved simulation of surround sound via headphones taking into account movement of the head. As the signals used for tracking are of the same kind as those generally generated and processed in an audio system, the additional hardware effort for a tracking system according to the present invention is minimized. In order to avoid disturbance, the sonic signal employed for tracking has a sound level below the threshold of hearing and is therefore non-audible.

The processing unit of the tracking system according to the present invention is preferably further capable of determining a positional parameter of the moveable object,

wherein the position parameter determination is also based on transmission time measurement of a signal between the transmitting device and the detection device. For instance, a positional parameter determined by a tracking system can be a horizontal deviation of the position of the head of a user from the central position in front of a video screen. As a user expects an amendment of the sound characteristics in case of horizontal movement in front of the screen, tracking is employed in order to adjust the surround characteristics.

The signal generator of the present invention is preferably a digital signal processor (DSP). A DSP can be easily implemented in an audio system and is capable of generating a plurality of signals having various frequencies, forms and amplitudes, which are desired in a particular situation in a tracking system.

According to a particular embodiment of the present invention, the transmitting device includes a single transmitter. According to another embodiment, the transmitting device includes a plurality of transmitters arranged at different positions. Analogously, in a preferred embodiment the detection device includes a single detector. In another preferred embodiment, the detection device includes a plurality of detectors arranged at different positions. In general, the number of transmitters and detectors a tracking system according to the present invention comprises depends on the number of geometrical parameters defining orientation and position of a moveable object that is required to be tracked by the tracking system. As mentioned above, for complete determination of orientation and spatial position of a three dimensional moveable object, three transmitters and three detectors are required. On the other hand, if less parameters are required due to certain geometrical restrictions which are fulfilled exactly or can be assumed to be fulfilled with sufficient accuracy, the number of parameters and the respective number of detectors and transmitters decreases. A similar situation also occurs in case if certain parameters are of no importance in a particular context. In other words, the number of required transmitters and detectors depends on the number of degrees of freedom of a moveable object that are to be tracked. In the simplest case, if only a single orientation parameter is relevant, already a single transmission time measurement can be sufficient. Therefore, only a single transmitter and a single detector are required.

Preferably, the tracking system employs loudspeakers as transmitters. As the signals employed for detection in the present invention are sonic signals in the audible frequency range, loudspeakers are specially suitable for transmitting. For instance, the loudspeakers may be those that are generally arranged in a room or inside a vehicle, wherein an audio system including headphones to be tracked is located.

A loudspeaker to be employed as a transmitter for the tracking system according to the present invention can at the same time further also emit an audible sonic signal. If, for instance, difference passengers traveling in a vehicle enjoy different audio / video programmes, some of them may use headphones that are tracked in accordance with the present invention, while others perceive the audio signals emitted by the installed fixed loudspeakers.

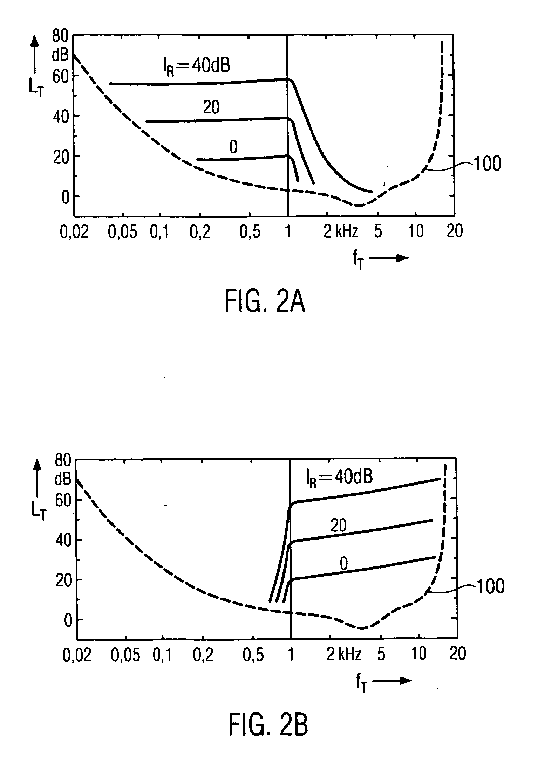

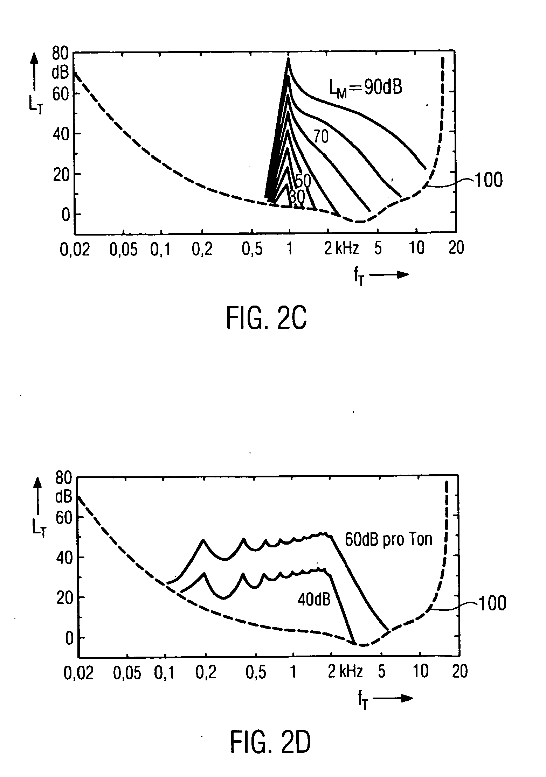

More preferably, in case of loudspeakers employed as signal transmitters further transmitting also an audible signal, a sonic signal is employed as detection signal that is non-audible due to masking by the emitted audible sonic signal. This will be explained in more detail below, with reference to Fig. 2. The threshold for hearing the sonic signal is increased in case of presence of further audio signals. This effect is called "masking". Under the conditions of masking, an increased signal level of a detection signal can be employed for tracking, which thus can be more reliably detected. The resulting masked threshold of hearing depends on frequency and statistical characteristics of the masking signal as well as of the masked signal. Therefore, a non-audible detection signal is preferably generated by the signal generator after determining the masked threshold of hearing on the basis of output information from an amplifier for feeding the loudspeaker, the output information reflecting the characteristics of the emitted audible sonic signal.

According to a preferred embodiment of the invention, a microphone is employed as a detector. In contrast to a human ear having a threshold of hearing that results from psychoacoustic properties, a microphone can easily detect also those sonic signals that have a signal level below the threshold of human hearing.

Preferably, the processing unit is capable of determining the orientation parameter on the basis of transmission time measurement, wherein the sound velocity is assumed to have a preset value. Accordingly, a determined transmission time can be easily be recalculated to a distance, without requiring determining sound velocity by measurement. In many practical situations, such as within a climatized vehicle, the environmental conditions can be assumed to be rather constant, and therefore a preset sound velocity is a rather suitable approximation.

Alternatively, a tracking system according to the present invention can include an additional transmitter or detector for determining the current value of the sound velocity. Accordingly, an additional transmission time can be measured, which allows to determine the sound velocity as an additional parameter, besides the geometric parameters for orientation / position. It is also possible to employ a pair of a detector and a transmitter at fixed positions with respect to each other, such that the sound velocity can be directly determined by transmitting a signal between both fixed transmitter and fixed detector.

According to a preferred embodiment, the transmitting device includes three transmitters forming a predetermined triangular arrangement at the detection device includes three detectors forming a predetermined triangular arrangement. Accordingly, the processing unit can determine the current value of the velocity of sound as well as completely determine orientation and position of the moveable objects on the basis of transmission time measurements between these transmitters and detectors.

Alternatively, in a minimal configuration the tracking system is capable of determining only a single orientation parameter, wherein it is assumed that only a single degree of freedom of motion is relevant in a particular context, and the single orientation parameter defines this single degree of freedom. Preferably, the single orientation parameter is a rotation angle of the moveable object around a vertical axis. Such a minimal configuration can be preferably employed in a situation, wherein a user wearing headphones to be tracked is sitting at an approximately fixed position (such as in an armchair at home, or in a seat of a vehicle), but turns around his head from time to time.

Preferably, the detection signal in accordance with the present invention is a sonic signal having a sound level below the absolute threshold of hearing. Such an embodiment is especially suitable, if no regular environmental or audio sound has to be taken into account. It will be explained in detail below, that the absolute threshold of hearing of the human ear rather strongly depends on the frequency. It is therefore preferred to employ a detection signal in an area of the audible frequency range, wherein the absolute threshold of hearing is relatively high. Thereby, a reliable signal detection can be achieved, while avoiding sonic disturbance.

As a detection signal, a signal is employed that is masked by other sonic signals. The masked sonic signals are not restricted to those emitted by an audio system (see above), but may also be those signals that occur in the environment of the tracking system (for instance noise occurring in a driving vehicle). For employing a masked detection signal, the tracking system comprises a masking determining unit for determining the masked threshold of hearing for the detection signal on the basis of a detection of the other sonic signals. The generation of detection signals can be adjusted such that the detection signals can be maximally reliably detected without disturbance. Preferably, the masking determining unit determines sound level and / or frequency of the detection signal on the basis of the determined masked threshold of hearing.

Preferably, the signal generator generates a plurality of detection signals for transmission time measurements between the transmitting device and the detection device, wherein all the detection signals are non-audible sonic signals in the audible frequency range. Specifically in a configuration employing a plurality of transmitters, wherein signals transmitted by plural transmitters are detected at the same time, advantageously a plurality of distinguishable signals are employed. These signals can be made distinguishable by specific encoding, respectively. In accordance with the present invention, however, all these signals are sonic signals in the audible frequency range but are not audible.

According to a further preferred aspect of the present invention, a vehicle entertainment and information system is provided. The vehicle entertainment and information system comprises headphones simulating a surround reproduction of audio data. The vehicle entertainment and information system further comprises a tracking system according to the first aspect of the present invention. The tracking system is capable of determining an orientation parameter of the headphones.

Preferably, the vehicle entertainment and information system further comprises at least one loudspeaker, wherein the loudspeaker is employed as a transmitter of the transmitting device according to the present invention.

Further embodiments of the present invention are the subject matter of dependent claims.

Additional features and advantages of the present invention will become apparent from the following and more particular description as illustrated in the accompanying drawings, wherein:

Fig. 1 is a diagram illustrating the absolute threshold of hearing for an average human ear as a function of frequency (dashed curve);

Fig. 2A is a diagram illustrating the masked thresholds of hearing of partial tones masked by low pass noise with a threshold frequency of 1 kHz for three different density levels as a function of test tone frequency;

Fig. 2B is a diagram illustrating the masked thresholds of hearing of partial tones masked by high pass noise the threshold frequency of 1 kHz for three different density levels as a function of test tone frequency;

Fig. 2C is a diagram illustrating the masked threshold of hearing masked by tones of 1 kHz having different levels;

Fig. 2D is a diagram illustrating the masked threshold of hearing masked by tones of 200Hz, taking into account the first 10 harmonics, as a function of test tone frequency;

Fig. 3 is an exemplary illustration of a moveable object showing a maximum of 6 degrees of freedom of a three dimensional moveable object;

Fig. 4 is a schematic overview of an embodiment of the present invention;

Fig. 5 schematically illustrates determination of a rotation angle in accordance with an embodiment of the present invention;

Fig. 6 schematically illustrates determination of orientation/position parameters in accordance with another embodiment of the present invention;

Fig. 7 schematically illustrates an embodiment of the present invention employing loudspeakers as signal transmitters; and

Fig. 8 is a general scheme illustrating the determination of the coordinates of a point (D) with the help of signal transmission time measurements between the point (D) and plurality of three points (A, B, C) having a fixed triangular arrangement with respect to each other.

Illustrative embodiment of the present invention will now be described with reference to the drawings.

The present invention relates to tracking of a moveable object with the help of detection signals transmitted between transmitters and detectors on the basis of transmission time measurement. A tracking system in accordance with the present invention differs from conventional tracking systems in that specific audio signals are employed for transmission time measurement. Namely, the present invention employs audio signals that are non-audible (and therefore do not disturb normal hearing), but are detectable by appropriate measurement technology, for instance, with a microphone.

Therefore, a tracking system according to the present invention is particularly suitable for an audio system comprising headphones simulating surround sound. Possible fields of implementation of the present invention are, for instance, headphones for passengers of a vehicle reproducing DVD or other multi-channel sound sources, teleconferencing, 3D-sound generated by a computer (e.g. in connection with computer games), or home cinematography. However, the fields of implementation of the present invention are not limited to these.

In the environment of an audio system, the present invention is particularly advantageous, as it does not require any sophisticated hardware. Therefore, costs for a tracking system can be considerably reduced by the present invention. In contrast to conventional tracking systems employing ultrasonic or electromagnetic detection signals, no specific signal generators normally not available in an audio system are required. The non-audible audio signals can be generated without effort, for instance on a digital signal processor (DSP). As transmitters, the present invention preferably employs those loudspeakers that are generally available in the environment of an audio system (in a vehicle, in the sitting room at home, or connected to a computer). Therefore, no transmitter costs occur. The costs for detectors are specifically low, since simple low-price microphones can be employed therefore.

The particular approach of the present invention is generally based on the fact that, due to psychoacoustic effects of the human hearing process, not all sounds are perceived by a person, even in the frequency domain, wherein the human generally is able to perceive sonic signals via the ears. A person skilled in the art is aware that the perception of sonic signals by a human being via the ears is generally restricted to a sound frequency domain from approximately 20 Hz to approximately 20 kHz. However, also within this frequency range, not every sonic signal can be perceived by a person via the ears. More particularly, a certain sound level of a sonic signal is required for a person to be able to perceive the signal. The simplest situation that may occur is a situation, wherein in the environment of a person only a single sonic signal exists. The sound level defining the perceivability of a sonic signal in that case is called "absolute threshold of hearing" or "threshold in quiet". The absolute threshold of hearing rather strongly depends on the frequency of a tone to be perceived.

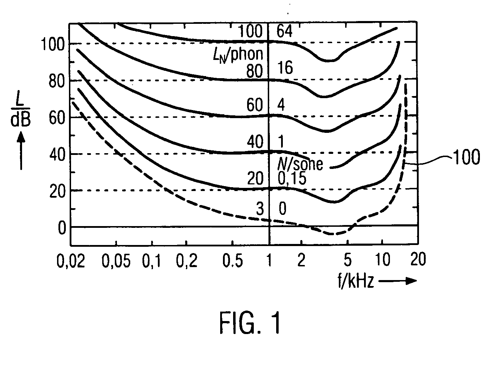

The dashed curve 100 in Fig.1 illustrates the absolute threshold of hearing as a function of tone frequency. The ordinate axis graded in decibel shows the sound level. As can be seen from the figure, the human ear achieves the highest perceivability for sound in the frequency range between around 2 and 5 kHz. The absolute threshold of hearing moderately increases for frequencies below 1kHz, and drastically increases for frequencies larger than 10kHz. (It is to be noted that the abscissa of Fig. 1 is based on the logarithmic frequency scale).

Sonic signals below the absolute threshold of hearing in the sound level-frequency plane of Fig. 1 are not perceivable. It has to be noted that the dashed curve 100 reflects the threshold in quiet of an average person. The threshold of hearing in quiet of an individual can deviate therefrom.

The further curves in Fig. 1 (above the absolute threshold) are so called curves of equal loudness level (in short: curves of equal loudness). These curves are based on psychoacoustic experiments and show the sound level of a tone that is perceived by the average person as having the same loudness. Curves are parameterized by the loudness level (symbol $L_N$) measured in unit: "phon". The loudness level in phon equals the sound level in decibel of a tone at a frequency of 1kHz that is perceived as having same loudness. As the absolute threshold of hearing at a frequency of f=1kHz equals L=3dB, the absolute threshold of hearing corresponds to the parameter value of $L_N$=3phon. An alternative parameterization of curves of equal loudness level is shown on the right hand side of Fig. 1. Parameter N is called loudness and does more appropriately reflect human perception. Per definition, the loudness of the absolute threshold of hearing corresponds to N=0.

As sonic signals having a sound level below the absolute threshold of hearing are generally not perceived, these signals are generally appropriate to be used as detection signals for a tracking system according to the present invention. Regarding the frequency, it is preferable to employ detection signals in those frequency ranges, wherein the absolute threshold of hearing is comparably high (i.e. outside the central area of the frequency axis shown in Fig. 1). As the sound level of a detection signal in that frequency domains can be relatively large compared to the central frequency range (from about 500 Hz to about 10 kHz), relatively intensive signals can be employed therein, which increases the reliability of detection, for instance by a microphone.

Therefore, under certain circumstances even a sonic signal having a sound level above the absolute threshold of hearing can be non-audible and can be therefore employed as a detection signal of a tracking system in accordance with the present invention. Such a situation is caused by a psychoacoustic effect, the so-called masking. The effect of masking is known from every day life. For talking with a partner in a quiet environment, rather low loudness is sufficient. If, however, suddenly a disturbing sound occurs, at the same time the sound of the speaking partner suddenly becomes in audible. Only after the speaking partner considerably increases the loudness level of his speech, the speech can be perceived once more.

The effect described above is called "masking". The speech is masked by the disturbing sound. The threshold for hearing of the speech sound has been increased by the disturbing sound. As a quantitative indicator, for audibility under a condition of masking, the so-called masked threshold of hearing has been introduced. The masked threshold of hearing indicates the sound level of a test sound (in most cases: a pure sine test tone) that is just audible together with the disturbing sound. Form and location of masked threshold of hearing in the sound level-frequency plane considerably depends on the acoustic properties of disturbing sounds. Figs. 2A to 2D illustrate a plurality of examples of masked thresholds of hearing caused by different disturbing sounds. As can be seen there from, the masked threshold of hearing is generally positioned above the absolute threshold of hearing (see dashed line 100 in Figs. 2A to 2D). Only in frequency areas, wherein the disturbing sound does not have frequency components, the masked threshold of hearing passes into the absolute threshold of hearing.

Fig. 2A illustrates the masked threshold of hearing caused by low pass noise. In the example of Fig. 2A, as disturbing sound a noise is employed that is obtained from white noise by applying a low pass filter with a threshold frequency of 1 kHz. The three curves shown are parameterized by density levels of respective noise. A similar example illustrated in Fig. 2B shows the masked thresholds of hearing for high pass noise obtained by applying a high pass filter with a threshold frequency of 1 kHz to white noise.

The effect of masking by noise can be applied within the framework of the present invention, if a tracking system according to the present invention is used in a noisy environment, such as, for instance, a vehicle, wherein noise is generated by a superposition of different sound sources regularly occurring in a driving vehicle. Therefore, even a detection signal above the absolute threshold of hearing can be used as non-audible detection signal in accordance with the present invention.

The effect of masking occurs not only under the condition of noise, but a masked threshold of hearing exists for masking by tones and sounds as well. Fig. 2C illustrates the masked threshold of hearing for pure sine tones having a frequency of 1 kHz. The plurality of curves shown in the diagram are parameterized by sound level $L_M$. However, most natural sounds are not pure tones (having the form of a pure sine wave), but are composed from a large plurality of harmonics. The masked threshold of hearing is considerably influenced by the amplitudes and sound levels of harmonics forming a disturbing sound. Fig. 2D illustrates two curves of masked thresholds of hearing for a tone of 200 Hz with 10 harmonics, wherein all harmonics have the same amplitude, but wherein the phase of the harmonics is statistically distributed. The two different curves in the diagram of Fig. 2D illustrate two cases, wherein the constituent tones have sound levels of 40 and 60 dB, respectively, while in the illustrated case (a pure tone with harmonics) at least in the lower frequency range (on the logarithmic frequency scale) the individual frequencies of constituent harmonics of the masking sounds can be clearly distinguished as peaks of the masked threshold of hearing. The masked threshold of hearing becomes more flat, if the masking sound has a more complex structure (such as an accord or even more complex kind of sound).

The effect of masking by sound is typically employed in an embodiment of the present invention, wherein loudspeakers of an audio system are simultaneously used for emitting sound, and for emitting a detection signal for a tracking system in accordance with the present invention. As the form of the masked threshold of hearing strongly depends on characteristic features of the masked sound, in this case preferably, current position of the masked threshold of hearing in the sound level-frequency place in determined, prior to generation of a detection signal for present invention. For this purpose, the signal generator for generating the detection signal is connected to an output of the amplifier generating the sound signal simultaneously output by the loudspeakers, such that the output characteristics of the amplifier are fed into the signal generator. The signal generator comprises an additional unit for determining the frequency dependent masked threshold of hearing for the current sound conditions, on the basis of the sound characteristics input from the amplifier (in particular, amplitude and phase distribution of the frequency constituents composing currently output sound). Accordingly, the signal generator of the tracking system of the present invention determines optimal frequency and amplitude parameters for a detecting signal to be generated, in order to be inaudible due to masking, and at the same time having sufficient amplitude to be reliably detected by a detector used, such as a standard microphone.

In this connection, it has to be emphasized that the effect of masking is purely based on psychoacoustic properties of the human hearing process, and does not apply to technical detection systems, such as microphones. Therefore, an inaudible detection signal in the audible frequency range can be employed for transmission time measurements in accordance with the present invention, while not causing any disturbance to the perception of audio signals transmitted simultaneously.

For more details regarding the absolute threshold of hearing and the phenomenon of masking, it is referred to the textbooks E. Zwicker, M. Zollner, "Elektroakustik", Springer-Verlag 1984 and E. Zwicker, "Psychoakustik", Springer-Verlag 1982. Fig. 1 has been reproduced from the first, and Figs. 2A to 2D have been reproduced from the second mentioned textbook.

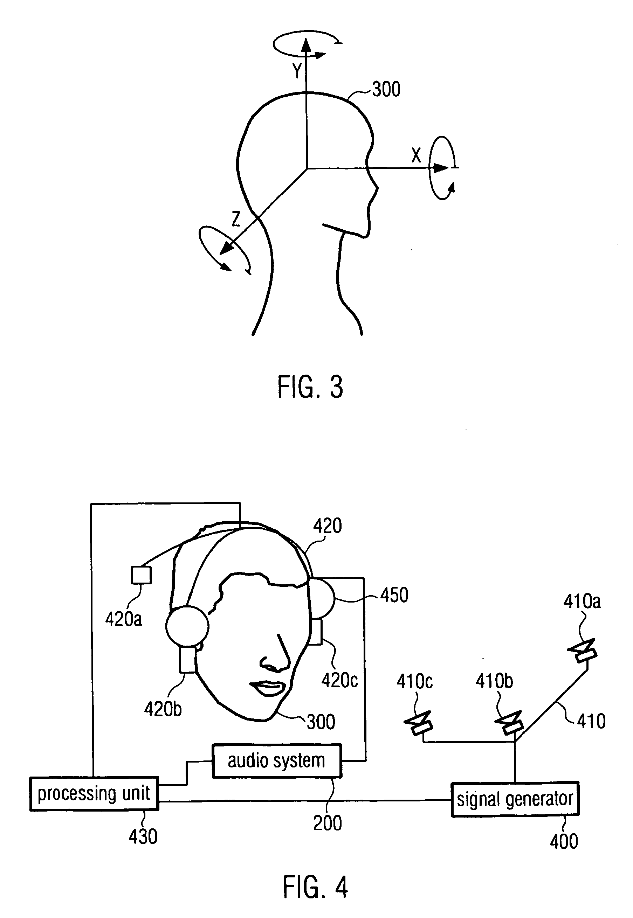

Fig. 3 illustrates the maximum of six degrees of freedom of the three-dimensional object 300 (in this case a human head, which may be a head wearing headphones for simulating surround sound) really moveable in space. The illustrated six degrees of freedom comprise three degrees of freedom of translation and three degrees of freedom of rotation. The three degrees of freedom of translation correspond to the components of movement of the moveable object as a whole along the directions of three axes in space that are perpendicular to each other. These axes are designated as X, Y and Z, respectively in Fig. 3. As indicated by the ring shaped arrows in Fig. 3, three rotational degrees of freedom correspond to a rotation of the moveable object as a whole around one of the three fixed axes X, Y and Z. Usually, rotation around the X axis is called pitch, rotation around the Y axis is called yaw, and rotation about the Z axis is called roll. Accordingly, in the example of Fig. 3 yaw rotation corresponds, for instance, to spinning in a swivel chair, pitch rotation corresponds, for instance to nodding from side to side, and roll rotation corresponds to nodding the head back and forth.

It is well known from general mechanics that every rotation of a moveable object can be composed from a superposition of rotations around three fixed orthogonal axes. Therefore, six degrees of freedom of motion described by six parameters are sufficient to completely describe motion of a three dimensional object. While the particular parameters employed to completely describe the orientation and position of a moveable object in accordance with the six degrees of freedom may vary from case to case, the overall number of independent parameters thus does not exceed six. However, in many cases possible motion is further restricted or can be assumed to be restricted in a sufficiently good approximation, such that the actual number of degrees of freedom and respective number of parameters to be determined by a tracking system is further reduced.

Fig. 4 illustrates an overall scheme of an embodiment of a tracking system according to the present invention employed in the environment of an audio system 200. The audio system 200 is connected to headphones 450 worn by a user 300. Headphones 450 constitute a moveable object to be tracked by the tracking system 200. Audio system 200 further comprises the components known in the art, such as a receiving unit, CD / DVD recording and reproduction devices, an amplifier, and loudspeakers, however the possible number and kind of components for audio system 200 is not restricted to these. For instance, together with audio system 200 also video components including one or a plurality of video display devices may be employed.

The illustrative components of the tracking system comprise signal generator 400, which is connected to transmission device 410 comprising three transmitters 410A, 410B and 410C in a triangular arrangement. The illustrated number of three transmitters is however not essential for the present invention. Depending on the number of degrees of freedom to be actually determined, at least one transmitter is required. Detection device 420 comprises three detectors 420A, 420B, 420C in a triangular arrangement and is fixed with respect to headphones 450. In analogy to the transmitting device, the number of three individual detectors is given by way of example only, and a person skilled in the art is aware that depending on the number of degrees of freedom to be actually determined at least one detector is required. Both transmitting device 410 and 420 are connected to processing unit 430 for time synchronization.

Signal generator 400 generates a single or a plurality of detecting signals. Every detection signal is constructed by superposition of sonic signals that are non-audible for a human being in view of the psychoacoustic specifics described above in connection with Figs. 1 and 2. Accordingly, the detection signals are constructed from such partial sonic signals that have spectra in the audible frequency domain below the respective threshold of hearing. In the simplest case, the signal generator of a tracking system according to the present invention generates detection signals that are below the absolute threshold of hearing (i.e. the dashed curve 100 in Figs. 1 and 2A to 2D). However, as the sound level of sonic signals below the absolute threshold of hearing is rather low, employing detection signals below the absolute threshold of hearing requires a rather sophisticated detection technique. Therefore, if possible in the circumstances of implementation of the present invention, the masked threshold of hearing may be used as the relevant threshold of hearing. If the detection signal is masked by other sound fields existing in space, it is sufficient for the detection signal to be generated by the signal generator 400 that the spectra of the detection signals are situated in the area below the current relevant mask threshold of hearing, which is generally higher than the absolute threshold of hearing, and therefore corresponds to a higher possible sound level of a detection signal, which accordingly can be more easily reliably detected.

The generated detection signal can be of arbitrary shape, however the detection signal preferably comprises a clearly detectable peak in order to define time of transmission and time of detection as exactly as possible for transmission time measurement. For transmission time measurement standard techniques, such as the correlation technique are employed. In case of a plurality of transmitters included in a transmission device 410, such as transmitters 410A, 410B and 410C in the embodiment illustrated in Fig. 4, a further requirement is that signals transmitted by the individual transmitters 410A, 410B and 410C can be clearly distinguished. This can be achieved, for instance, by employing different frequency ranges or by employing specifically encoded digital signals. Alternatively, subsequent transmission in the time domain is possible.

In case of a masked detection signal, signal generator 400 must be equipped with additional functional units for determining a currently relevant masked threshold of hearing. In particular, if masking occurs due to general environmental sound (noise) the signal generator must be connected to a noise detection unit (not shown), and an internal or external evaluating unit (such as processing unit 430) must be capable of determining the mask threshold of hearing on the basis of the properties of the detected noise.

On the other hand, if the relevant masked threshold of hearing is basically determined from sound generated by audio system 200 and emitted by loudspeakers (not shown) that are arranged in the space, wherein the tracking system operates, the required characteristics of the masking sound can be received directly from the audio system (in particular, from an amplifier output).In this case, an additional connection (not shown) between audio system 200 and signal generator 400 is required. On the basis of the received audio characteristics, the signal generator determines those detection signal characteristics regarding frequency and / or amplitude that can be most reliably detected, but are nevertheless inaudible.

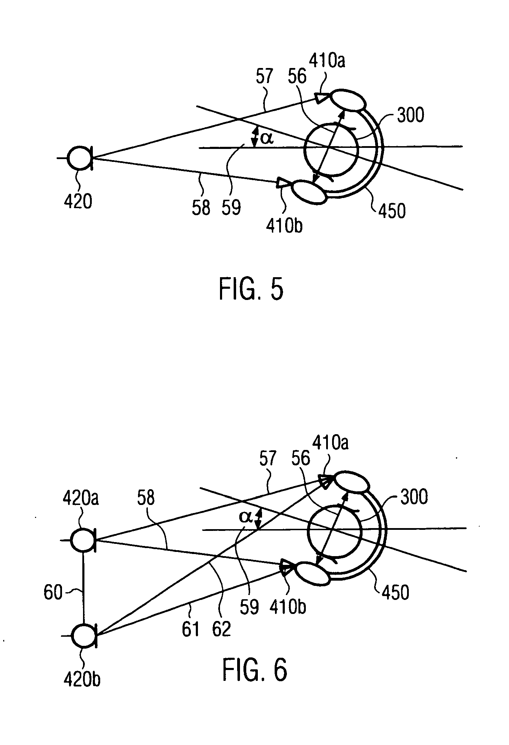

Every individual detection signal transmitted by an individual transmitter 410A, 410B, 410C is individually detected by detectors 420A, 420B and 420C. In the illustrated case, therefore a maximum of nine individual transmission times (from every of three transmitters to every of three detectors) can be measured. As the positions of the transmitters 410A, 410B and 410C are assumed to be fixed in a predetermined space, the processing unit is capable of determining the position and orientation of the moveable object 420 with respect to the predetermined space (described in more detail below with reference to Figs. 5 to 8).

It is to be noted that transmitting, device 410 has to be fixed with respect to a predetermined space in order to determine orientation and position of a moveable object with respect to this predetermined space as a reference frame. Such a predetermined space may be, for instance, a room in a flat, as well as the interior of an arbitrarily moving vehicle.

In the embodiment of Fig. 4, the transmitting device is fixed in the predetermined space, while the detection device is fixed at the moveable object. Such an embodiment is preferably used, for instance, in case of employing loudspeakers of an existing audio system arranged in the predetermined space as transmitters. However, the present invention is not restricted to the case of a transmission device 410 fixed in the predetermined space and the detection device 420 moveable together with the object to be tracked. A person skilled in the art is aware that due to the feature of reciprocity of transmission sonic of signals, in an alternative embodiment, the detection device 420 can be fixed in a predetermined space, while the transmission device is fixed on the moveable object. For instance, such an embodiment may be advantageous in case of a plurality of objects to be tracked in the predetermined space by a single tracking system, wherein the individual moveable objects to be tracked can be distinguished by specific detection signals.

In the following, an exemplary embodiment for determining a single orientation parameter, $\alpha$, will be explained with reference to Fig. 5.

Fig. 5 schematically illustrates a head 300, wearing a pair of headphones 450, wherein each of the headphones is equipped with a small signal transmitter 410A and 410B. Microphone 420 for detecting a signal transmitted from either transmitter 410 or 410B is arranged in front of the person wearing the headphones. In the illustrated case it is assumed that the movement of the head of a person to be tracked is restricted to rotation around a single axis (perpendicular to the plane of the drawing) in good approximation. Transmission time of a signal from transmitter 410A to detector 420 via path 57 and the transmission time from transmitter 410B to detector 420 via path 58 are measured. If the overall distance between head 300 and detector 420 is known, the current value of the sound velocity can be derived from the average of both measured transmission times. On the basis of the thus determined sound velocity, the distances 57 and 58 between both headphones and microphones 420 are determined on the basis of the measured transmission times. If distance 56 between both headphones 410A and 410B is moreover known, orientation angle $\alpha$ (59) can be easily determined by triangulation based on the distances 57 and 58. As a person skilled in the art is aware of how to determine orientation angle by triangulation, a detailed description thereof is omitted herein.

The configuration of a second exemplary example illustrated in Fig.6 differs from the configuration of Fig. 5 in that the configuration of Fig. 6 comprises two detectors 420A and 420B instead of a single detector 420. Distance 60 between both detectors 420A and 420B is assumed to be known. Transmission time measurements of a detection signal between transmitter 410A and second detector 420B via path 62 and transmission time of a detection signal between transmitter 410B and the second detector 420B via path 61 are measured in addition to transmission times between both transmitters 410A and 410B to the first detector 420A via passes 57 and 58. The additional data available in the configuration of Fig.6 allow a horizontal position coordinate (indicating the position of the head to be tracked along a line parallel to the connection 60 between both detectors 420A and 420B) to be additionally determined by triangulation.

Alternatively, configuration of Fig.5 also allows to determine, in addition to the orientation parameter $\alpha$ (59) also a distance between moveable object 300 and fixed detector 420, if a sufficiently exact value of the current velocity of sound is known in advance. In the same manner, the configuration of Fig.6 allows to additionally determine a vertical position parameter, if the sound velocity can be assumed to be known.

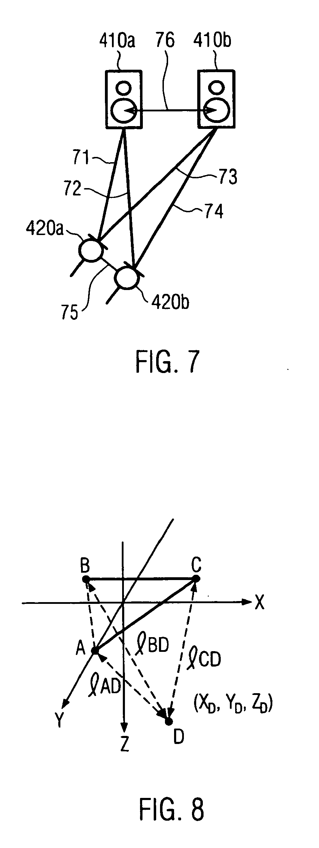

The configuration of Fig. 7 is inverse to the configuration of Fig.6 in that according to the configuration of Fig. 7 transmitters 410A and 410B are fixed, while detectors 420A and 420B are fixed on the moveable object. As indicated above, the reciprocity property of sonic signals employed for detection, allows the configuration of Fig.7 to be equally employed as the configuration of Fig. 6. Accordingly, the predetermined distance 76 between transmitters 410A and 410B corresponds to distance 56 of Fig.6, and the predetermined distance 75 between detectors 420A and 420B corresponds to distance 60 of Fig. 6. Transmission paths 71, 72, 73 and 74 of Fig. 7 correspond to transmission paths 57, 62, 58 and 61, respectively.

As mentioned above and indicated in the drawing, in the configuration of Fig.7 preferably existing loudspeakers of an audio system employed as transmitters. A realistic situation, wherein such configuration occurs is, for instance, a multimedia environment (inside a vehicle, and any other room), wherein different users enjoy different programmes, by using headphones and speakers, respectively. Alternatively, an equivalent configuration occurs if existing loudspeakers are temporarily not used by emitting sound, but the user employs headphones for enjoying a programme. In this case, the existing loudspeakers can be nevertheless employed for emitting the non-audible detection signal (for instance, a signal below the absolute threshold of hearing) without causing any disturbance.

Fig. 8 schematically illustrates complete determination of the coordinates $(X_D, Y_D, Z_D)$ of a single detector D. It is assumed that three transmitters A, B, and C having coordinates $(X_A, Y_A, Z_A)$, $(X_B, Y_B, Z_B)$ and $(X_C, Y_C, Z_C)$, respectively (not shown), are arranged in a fixed triangular arrangement. If distances $l_{AD}$, $l_{BD}$, $l_{CD}$ are determined by signal transmission time measurements on the basis of a known sound velocity, three geometric equations are available for determining the three unknown coordinates $X_D$, $Y_D$ and $Z_D$.

$$\left(X_D - X_A\right)^2 + \left(Y_D - Y_A\right)^2 + \left(Z_D - Z_A\right)^2 = l^2{}_{AD}$$

$$\left(X_D - X_B\right)^2 + \left(Y_D - Y_B\right)^2 + \left(Z_D - Z_B\right)^2 = l^2{}_{BD}$$

$$\left(X_D - X_C\right)^2 + \left(Y_D - Y_C\right)^2 + \left(Z_D - Z_C\right)^2 = l^2{}_{CD}$$

If it is further assumed that there exist two additional detectors E and F (not shown for simplicity), such that detectors, D, E and F form a fixed triangular arrangement with respect to each other, equivalent equations are also valid for the coordinates of the additional detectors E and F. In total, nine equations and nine transmission time measurements are possible. However, as described above with reference to Fig. 3, a fixed triangular arrangement has only six degrees of freedom of motion, such that only six of the unknown coordinates can be changed independently, while the other coordinates are predetermined by the geometry of the triangular detector arrangement. Therefore, additional information available to also determine the velocity of sound.

In summary, the present invention relates to a tracking system and method for determining at least orientation of a moveable object, on the basis of detection signal transmission time measurement between a transmitter and detector. As a detection signal, the present invention employs sonic signals that are non-audible in view of having a sound level below the threshold of hearing. Depending on the particular circumstances of implementation, the threshold of hearing can be the absolute as well as the masked threshold of hearing. The present invention is particularly advantageous in the environment of an audio system, such as a vehicle entertainment and information system. A tracking functionality for the orientation of headphones is required in an audio system for an improved simulation of surround sound via the headphones. On the other hand, the necessary hardware for generating and processing sonic signals is already available in audio systems.

**Claims**

1. A tracking system for tracking headphones (450) simulating a surround sound reproduction of audio data, the tracking system comprising:

   a signal generator (400) for generating a detection signal,
   a transmitting device (410) for transmitting said detection signal generated by said signal generator,
   a detection device (420) for detecting said detection signal transmitted by said transmitting device (410), wherein either the transmitting device (410) or the detection device (420) is fixed on said headphones (450), and the other one of said transmitting device (410) and said detection device (420) is located at a fixed position, and
   a processing unit (430) for determining at least one orientation parameter ($\alpha$) of said movable object (300) based on transmission time measurement of said detection signal between said transmitting device (410) and said detection device (420),
   **characterized in that**
   said detection signal being a sonic signal in the audible frequency range, below the masked threshold of hearing, due to masking by general environmental sound, and by
   a masking determining unit for determining the masked threshold of hearing for said detection signal on the basis of a detection of said general environmental sound.

2. A tracking system according to claim 1, wherein said processing unit (430) further being adapted to determine at least one position parameter (x; y; z) of said headphones (450) based on transmission time measurement between said transmitting device (410) and said detection device (420).

3. A tracking system according to claim 1 or 2, wherein said signal generator (400) being a digital signal processor.

4. A tracking system according to any of claims 1 to 3, wherein said transmitting device (410) including a single transmitter.

5. A tracking system according to any of claims 1 to 3, wherein said transmitting device (410) including a plurality of transmitters (410a, 410b, 410c) arranged at different positions.

6. A tracking system according to any of claims 1 to 5, wherein said transmitting device (410) including at least one loudspeaker.

7. A tracking system according to claim 6, wherein said loudspeaker further emitting an audible sonic signal.

8. A tracking system according to claim 7, wherein said general environmental sound includes said audible sonic signal emitted by said loudspeaker.

9. A tracking system according to any of claims 1 to 8, wherein said detection device (420) including a single detector.

10. A tracking system according to any of claims 1 to 8, wherein said detection device (420) including a plurality of detectors (420a, 420b, 420c) arranged at different positions.

11. A tracking system according to any of claims 1 to 10, wherein said detection device (420) including at least one microphone.

12. A tracking system according to any of claims 1 to 11, wherein said processing unit (430) being adapted to determine the orientation parameter ($\alpha$) on the basis of transmission time measurement and a preset value of the sound velocity.

13. A tracking system according to any of claims 1 to 11, including an additional transmitter or detector for determining the current value of the sound velocity.

**14.** A tracking system according to claim 13, wherein said transmitting device (410) including three transmitters (410a, 410b, 410c) forming a predetermined triangular arrangement and said detection device (420) including three detectors (420a, 420b, 420c) forming a predetermined triangular arrangement, and
said processing unit (430) being adapted to determine the current value of the velocity of sound and to completely determine orientation and position of said headphones (450) on the basis of transmission time measurements between said transmitters and detectors.

**15.** A tracking system according to any of claims 1 to 13, wherein said processing unit (430) being adapted to determine a single orientation parameter ($\alpha$), assuming that said headphones (450) having only a single degree of freedom of motion described by said single orientation parameter ($\alpha$).

**16.** A tracking system according to claim 15, wherein said single orientation parameter ($\alpha$) being a rotation angle around a vertical axis of said headphones (450).

**17.** A tracking system according to any of claims 1 to 16, wherein said detection signal being a sonic signal having a sound level below the absolute threshold (100) of hearing.

**18.** A tracking system according to claim 17, wherein said detection signal being a sonic signal in the frequency range between 20Hz and 16kHz.

**19.** A tracking system according to claim 18, wherein said detection signal being a sonic signal in the frequency range between 100 Hz and 1 kHz.

**20.** A tracking system according to claim 18, wherein said detection signal being a sonic signal in the frequency range above 10 kHz.

**21.** A tracking system according to any of claims 1 to 20, wherein said masking determining unit being adapted to determine sound level and/or frequency of said detection signal on the basis of said determined masked threshold of hearing.

**22.** A tracking system according to any of claims 1 to 21, wherein said general environmental sound includes noise that occurs in a noisy environment.

**23.** A tracking system according to any of claims 1 to 22, wherein said signal generator (400) being adapted to generate a plurality of detection signals for transmission time measurements between said transmitting device (410) and said detection device, said plurality of detection signals being non-audible sonic signals in the audible frequency range.

**24.** A vehicle entertainment and information system comprising:

headphones (450) simulating a surround reproduction of audio data, and
a tracking system (400, 410, 420, 430) according to any of claims 1 to 23 for determining an orientation parameter ($\alpha$) of said headphones (450).

**25.** A vehicle entertainment and information system according to claim 24, further comprising at least one loudspeaker, wherein said loudspeaker being employed as a transmitter (410a, 410b) of said transmitting device (410).

**26.** A method of tracking headphones (450) simulating a surround sound reproduction of audio data, the method comprising the steps of:

generating a detection signal,
transmitting said detection signal from a transmitting device (410) to a detection device (420), wherein either the transmitting device (410) or the detection device (420) is fixed on said headphones (450), and the other one of said detection device (420) and said transmitting device (410) is located at a fixed position,
detecting said transmitted detection signal at said detection device (420), and
determining at least one orientation parameter ($\alpha$) of said headphones (450) based on transmission time measurement of said detection signal between said transmitting device (410) and said detection device (420),
**characterized in that**
said detection signal being a sonic signal in the audible frequency range, below the masked threshold of hearing, due to masking by general environmental sound, and by the step of
determining the masked threshold of hearing for said detection signal on the basis of a detection of said general environmental sound.

27. A method according to claim 26, further comprising the step of determining at least one position parameter (x; y, z) of said headphones (450) based on transmission time measurement between said transmitting device (410) and said detection device (420).

28. A method according to claim 26 or 27, wherein said transmitting device (410) including a single transmitter.

29. A method according to claim 26 or 27, wherein said transmitting device (410) including a plurality of transmitters (410a, 410b, 410c) arranged at different positions.

30. A method according to any of claims 26 to 29, wherein said transmitting device (410) including at least one loudspeaker.

31. A method according to claim 30, wherein said loudspeaker further emitting an audible sonic signal.

32. A method according to claim 31, wherein said general environmental sound includes said audible sonic signal emitted by said loudspeaker.

33. A method according to any of claims 26 to 32, wherein said detection device (420) including a single detector.

34. A method according to any of claims 26 to 32, wherein said detection device (420) including a plurality of detectors (420a, 420b, 420c) arranged at different positions.

35. A method according to any of claims 26 to 34, wherein said detection device (410) including at least one microphone.

36. A method according to any of claims 26 to 35, wherein said determining step determining the orientation parameter ($\alpha$) on the basis of transmission time measurement and a preset value of the sound velocity.

37. A method according to any of claims 26 to 35, further comprising the step of determining the current value of the sound velocity by employing an additional transmitter or detector.

38. A method according to claim 37, completely determining orientation and position of said movable object on the basis of transmission time measurements between three transmitters (410a, 410b, 410c) forming a predetermined triangular arrangement included in said transmitting device (410) and three detectors (420a, 420b, 420c) forming a predetermined triangular arrangement included in said detection device (420).

39. A method according to any of claims 26 to 37, determining a single orientation parameter ($\alpha$) and assuming that said headphones (450) having only a single degree of freedom of motion described by said single orientation parameter ($\alpha$).

40. A method according to claim 39, wherein said single orientation parameter ($\alpha$) being a rotation angle around a vertical axis of said headphones (450).

41. A method according to any of claims 26 to 40, wherein said detection signal being a sonic signal having a sound level below the absolute threshold of hearing (100).

42. A method according to claim 41, wherein said detection signal being.a sonic signal in the frequency range between 20Hz and 16kHz.

43. A method according to claim 42, wherein said detection signal being a sonic signal in the frequency range between 100 Hz and 1 kHz.

44. A method according to claim 42, wherein said detection signal being a sonic signal in the frequency range above 10 kHz.

**45.** A method according to claim 26, further comprising the step of determining sound level and/or frequency of said detection signal on the basis of said determined masked threshold of hearing.

**46.** A method according to any of claims 26 to 45, wherein said general environmental sound includes noise that occurs in a noisy environment.

**47.** A method according to any of claims 26 to 46, wherein said generating step generating a plurality of detection signals for transmission time measurements between said transmitting device (410) and said detection device (420), said plurality of detection signals being non-audible sonic signals in the audible frequency range.

**Patentansprüche**

**1.** Verfolgungssystem zum Verfolgen von Kopfhörern (450), die eine Surround-Sound-Wiedergabe von Audiodaten simulieren, wobei das Verfolgungssystem umfasst:

eine Signalerzeugungseinrichtung (400) zum Erzeugen eines Erfassungssignals,
eine Übertragungsvorrichtung (410) zum Übertragen des durch die Signalerzeugungseinrichtung erzeugten Erfassungssignals,
eine Erfassungsvorrichtung (420) zum Erfassen des durch die Übertragungsvorrichtung (410) übertragenen Erfassungssignals, wobei entweder die Übertragungsvorrichtung (410) oder die Erfassungsvorrichtung (420) an den Kopfhörern (450) befestigt ist und sich die andere Vorrichtung, d. h. die Erfassungsvorrichtung (420) bzw. die Übertragungsvorrichtung (410), an einer stationären Position befindet, und
eine Verarbeitungseinheit (430) zum Bestimmen wenigstens eines Ausrichtungsparameters ($\alpha$) des beweglichen Objektes (300) auf Basis von Übertragungszeitmessung des Erfassungssignals zwischen der Übertragungsvorrichtung (410) und der Erfassungsvorrichtung (420),
**gekennzeichnet**
**dadurch, dass** das Erfassungssignal ein Schallsignal im hörbaren Frequenzbereich unterhalb der Verdeckungs-Hörschwelle aufgrund von Verdeckung durch allgemeinen Umgebungsschall ist, und
durch eine Verdeckungs-Bestimmungseinheit zum Bestimmen der Verdeckungs-Hörschwelle für das Erfassungssignal auf Basis einer Erfassung des allgemeinen Umgebungsschalls.

**2.** Verfolgungssystem nach Anspruch 1, wobei die Verarbeitungseinheit (430) des Weiteren so eingerichtet ist, dass sie wenigstens einen Positionsparameter (x; y; z) der Kopfhörer (450) auf Basis von Übertragungszeitmessung zwischen der Übertragungsvorrichtung (410) und der Erfassungsvorrichtung (420) bestimmt.

**3.** Verfolgungssystem nach Anspruch 1 oder 2, wobei die Signalerzeugungseinrichtung (400) ein digitaler Signalprozessor ist.

**4.** Verfolgungssystem nach einem der Ansprüche 1 bis 3, wobei die Übertragungsvorrichtung (410) eine einzige Übertragungseinrichtung enthält.

**5.** Verfolgungssystem nach einem der Ansprüche 1 bis 3, wobei die Übertragungsvorrichtung (410) eine Vielzahl von Übertragungseinrichtungen (410a, 410b, 410c) enthält, die an verschiedenen Positionen angeordnet sind.

**6.** Verfolgungssystem nach einem der Ansprüche 1 bis 5, wobei die Übertragungsvorrichtung (410) wenigstens einen Lautsprecher enthält.

**7.** Verfolgungssystem nach Anspruch 6, wobei der Lautsprecher des Weiteren ein hörbares Schallsignal emittiert.

**8.** Verfolgungssystem nach Anspruch 7, wobei der allgemeine Umgebungsschall das von dem Lautsprecher emittierte hörbare Schallsignal einschließt.

**9.** Verfolgungssystem nach einem der Ansprüche 1 bis 8, wobei die Erfassungsvorrichtung (420) einen einzigen Detektor enthält.

**10.** Verfolgungssystem nach einem der Ansprüche 1 bis 8, wobei die Erfassungsvorrichtung (420) eine Vielzahl von Detektoren (420a, 420b, 420c) enthält, die an verschiedenen Positionen angeordnet sind.

**11.** Verfolgungssystem nach einem der Ansprüche 1 bis 10, wobei die Erfassungsvorrichtung (420) wenigstens ein Mikrofon enthält.

**12.** Verfolgungssystem nach einem der Ansprüche 1 bis 11, wobei die Verarbeitungseinheit (430) so eingerichtet ist, dass sie den Ausrichtungsparameter ($\alpha$) auf Basis von Übertragungszeitmessung und einem voreingestellten Wert der Schallgeschwindigkeit bestimmt.

**13.** Verfolgungssystem nach einem der Ansprüche 1 bis 11, das eine zusätzliche Übertragungseinrichtung oder Detektor zum Bestimmen des aktuellen Wertes der Schallgeschwindigkeit enthält.

**14.** Verfolgungssystem nach Anspruch 13, wobei die Übertragungsvorrichtung (410) drei Übertragungseinrichtungen (410a, 410b, 410c) enthält, die eine vorgegebene Dreieckanordnung bilden, und die Erfassungsvorrichtung (420) drei Detektoren (420a, 420b, 420c) enthält, die eine vorgegebene Dreieckanordnung bilden, und die Verarbeitungseinheit (430) so eingerichtet ist, dass sie den aktuellen Wert der Schallgeschwindigkeit bestimmt und Ausrichtung sowie Position der Kopfhörer (450) vollständig auf Basis von Übertragungszeitmessungen zwischen den Übertragungseinrichtungen und Detektoren bestimmt.

**15.** Verfolgungssystem nach einem der Ansprüche 1 bis 13, wobei die Verarbeitungseinheit (430) so eingerichtet ist, dass sie einen einzigen Ausrichtungsparameter ($\alpha$) bestimmt und dabei davon ausgeht, dass die Kopfhörer (450) nur einen einzigen Freiheitsgrad der Bewegung haben, der durch den einzigen Ausrichtungsparameter ($\alpha$) beschrieben wird.

**16.** Verfolgungssystem nach Anspruch 15, wobei der einzige Ausrichtungsparameter ($\alpha$) ein Drehwinkel um eine vertikale Achse der Kopfhörer (450) herum ist.

**17.** Verfolgungssystem nach einem der Ansprüche 1 bis 16, wobei das Erfassungssignal ein Schallsignal ist, das einen Schallpegel unterhalb der absoluten Hörschwelle (100) hat.

**18.** Verfolgungssystem nach Anspruch 17, wobei das Erfassungssignal ein Schallsignal im Frequenzbereich zwischen 20 Hz und 16 kHz ist.

**19.** Verfolgungssystem nach Anspruch 18, wobei das Erfassungssignal ein Schallsignal im Frequenzbereich zwischen 100 Hz und 1 kHz ist.

**20.** Verfolgungssystem nach Anspruch 18, wobei das Erfassungssignal ein Schallsignal im Frequenzbereich oberhalb von 10 kHz ist.

**21.** Verfolgungssystem nach einem der Ansprüche 1 bis 20, wobei die Verdeckungs-Bestimmungseinheit so eingerichtet ist, dass sie Schallpegel und/oder Frequenz des Erfassungssignals auf Basis der bestimmten Verdeckungs-Hörschwelle bestimmt.

**22.** Verfolgungssystem nach einem der Ansprüche 1 bis 21, wobei der allgemeine Umgebungsschall Geräusche enthält, die in einer geräuschvollen Umgebung auftreten.

**23.** Verfolgungssystem nach einem der Ansprüche 1 bis 22, wobei die Signalerzeugungseinrichtung (400) so eingerichtet ist, dass sie eine Vielzahl von Erfassungssignalen für Übertragungszeitmessungen zwischen der Übertragungsvorrichtung (410) und der Erfassungsvorrichtung erzeugt, und die Vielzahl von Erfassungssignalen nicht hörbare Schallsignale im hörbaren Frequenzbereich sind.

**24.** Fahrzeug-Unterhaltungs-und-Informations-System, das umfasst:

Kopfhörer (450), die eine Surround-Wiedergabe von Audiodaten simulieren, und
ein Verfolgungssystem (400, 410, 420, 430) nach einem der Ansprüche 1 bis 23 zum Bestimmen eines Ausrichtungsparameters ($\alpha$) der Kopfhörer (450).

**25.** Fahrzeug-Unterhaltungs-und-Informations-System nach Anspruch 24, das des Weiteren wenigstens einen Lautsprecher umfasst, wobei der Lautsprecher als eine Übertragungseinrichtung (410a, 410b) der Übertragungsvorrichtung (410) eingesetzt wird.

**26.** Verfahren zum Verfolgen von Kopfhörern (450), die eine Surround-Sound-Wiedergabe von Audiodaten simulieren, wobei das Verfahren die folgenden Schritte umfasst:

Erzeugen eines Erfassungssignals,
Übertragen des Erfassungssignals von einer Übertragungsvorrichtung (410) zu einer Erfassungsvorrichtung (420), wobei entweder die Übertragungsvorrichtung (410) oder die Erfassungsvorrichtung (420) an den Kopfhörern (450) befestigt ist und sich die andere Vorrichtung, d. h. die Erfassungsvorrichtung (420) bzw. die Übertragungsvorrichtung (410), an einer stationären Position befindet,
Erfassen des übertragenen Erfassungssignals an der Erfassungsvorrichtung (420), und
Bestimmen wenigstens eines Ausrichtungsparameters ($\alpha$) der Kopfhörer (450) auf Basis von Übertragungszeitmessung des Erfassungssignals zwischen der Übertragungsvorrichtung (410) und der Erfassungsvorrichtung (420),
**gekennzeichnet**
**dadurch, dass** das Erfassungssignal ein Schallsignal im hörbaren Frequenzbereich unterhalb der Verdeckungs-Hörschwelle aufgrund von Verdeckung durch allgemeinen Umgebungsschall ist, sowie durch den Schritt des
Bestimmens der Verdeckungs-Hörschwelle für das Erfassungssignal auf Basis einer Erfassung des allgemeinen Umgebungsschalls.

**27.** Verfahren nach Anspruch 26, das des Weiteren den Schritt des Bestimmens eines Positionsparameters (x; y; z) der Kopfhörer (450) auf Basis von Übertragungszeitmessung zwischen der Übertragungsvorrichtung (410) und der Erfassungsvorrichtung (420) umfasst.

**28.** Verfahren nach Anspruch 26 oder 27, wobei die Übertragungsvorrichtung (410) eine einzige Übertragungseinrichtung enthält.

**29.** Verfahren nach Anspruch 26 oder 27, wobei die Übertragungsvorrichtung (410) eine Vielzahl von Übertragungseinrichtungen (410a, 410b, 410c) enthält, die an verschiedenen Positionen angeordnet sind.

**30.** Verfahren nach einem der Ansprüche 26 bis 29, wobei die Übertragungsvorrichtung (410) wenigstens einen Lautsprecher enthält.

**31.** Verfahren nach Anspruch 30, wobei der Lautsprecher des Weiteren ein hörbares Schallsignal emittiert.

**32.** Verfahren nach Anspruch 31, wobei der allgemeine Umgebungsschall das von dem Lautsprecher emittierte hörbare Schallsignal einschließt.

**33.** Verfahren nach einem der Ansprüche 26 bis 32, wobei die Erfassungsvorrichtung (420) einen einzigen Detektor enthält.

**34.** Verfahren nach einem der Ansprüche 26 bis 32, wobei die Erfassungsvorrichtung (420) eine Vielzahl von Detektoren (420a, 420b, 420c) enthält, die an verschiedenen Positionen angeordnet sind.

**35.** Verfahren nach einem der Ansprüche 26 bis 34, wobei die Erfassungsvorrichtung (420) wenigstens ein Mikrofon enthält.

**36.** Verfahren nach einem der Ansprüche 26 bis 35, wobei mit dem Bestimmungsschritt der Ausrichtungsparameter ($\alpha$) auf Basis von Übertragungszeitmessung und einem voreingestellten Wert der Schallgeschwindigkeit bestimmt wird.

**37.** Verfahren nach einem der Ansprüche 26 bis 35, das des Weiteren den Schritt des Bestimmens des aktuellen Wertes der Schallgeschwindigkeit durch Einsetzen eines zusätzlichen Senders oder Detektors umfasst.

**38.** Verfahren nach Anspruch 37, wobei Ausrichtung und Position des beweglichen Objektes vollständig auf Basis von Übertragungszeitmessungen zwischen drei Übertragungseinrichtungen (410a, 410b, 410c), die eine vorgegebene Dreieckanordnung bilden und in der Übertragungsvorrichtung (410) enthalten sind, und drei Detektoren (420a, 420b, 420c) bestimmt werden, die eine vorgegebene Dreieckanordnung bilden und in der Erfassungsvorrichtung (420) enthalten sind.

**39.** Verfahren nach einem der Ansprüche 26 bis 37, wobei ein einziger Ausrichtungsparameter (α) bestimmt wird und dabei davon ausgegangen wird, dass die Kopfhörer (450) nur einen einzigen Freiheitsgrad der Bewegung haben, der durch den einzigen Ausrichtungsparameter (α) beschrieben wird.

**40.** Verfahren nach Anspruch 39, wobei der einzige Ausrichtungsparameter (α) ein Drehwinkel um eine vertikale Achse der Kopfhörer (450) herum ist.

**41.** Verfahren nach einem der Ansprüche 26 bis 40, wobei das Erfassungssignal ein Schallsignal ist, das einen Schallpegel unterhalb der absoluten Hörschwelle (100) hat.

**42.** Verfahren nach Anspruch 41, wobei das Erfassungssignal ein Schallsignal im Frequenzbereich zwischen 20 Hz und 16 kHz ist.

**43.** Verfahren nach Anspruch 42, wobei das Erfassungssignal ein Schallsignal im Frequenzbereich zwischen 100 Hz und 1 kHz ist.

**44.** Verfahren nach Anspruch 42, wobei das Erfassungssignal ein Schallsignal im Frequenzbereich oberhalb von 10 kHz ist.

**45.** Verfahren nach Anspruch 26, das des Weiteren den Schritt des Bestimmens des Schallpegels und/oder der Frequenz des Erfassungssignals auf Basis der bestimmten Verdeckungs-Hörschwelle umfasst.

**46.** Verfahren nach einem der Ansprüche 26 bis 45, wobei der allgemeine Umgebungsschall Geräusche einschließt, die in einer geräuschvollen Umgebung auftreten.

**47.** Verfahren nach einem der Ansprüche 26 bis 46, wobei mit dem Erzeugungsschritt eine Vielzahl von Erfassungssignalen für Übertragungszeitmessungen zwischen der Übertragungsvorrichtung (410) und der Erfassungsvorrichtung (420) erzeugt werden und die Vielzahl von Erfassungssignalen nicht hörbare Schallsignale im hörbaren Frequenzbereich sind.

**Revendications**

**1.** Système de poursuite permettant de poursuivre un casque d'écoute (450) en simulant la reproduction d'un son 3D (d'ambiophonie) de données audio, le système de poursuite comprenant ;
un générateur de signal (400) permettant de générer un signal de détection,
un dispositif de transmission (410) permettant de transmettre ledit signal de détection généré par ledit générateur de signal,
un dispositif de détection (420) permettant de détecter ledit signal de détection transmis par ledit dispositif de transmission (410), dans lequel soit le dispositif de transmission (410), soit le dispositif de détection (420), est fixé sur ledit casque d'écoute (450) et où l'autre dudit dispositif de transmission (410) et dudit dispositif de détection (420) est situé à une position fixe, et
une unité de traitement (430) permettant de déterminer au moins un paramètre d'orientation (α) dudit objet mobile (300) sur la base d'une mesure de la durée de la transmission dudit signal de détection entre ledit dispositif de transmission (410) et ledit dispositif de détection (420),
**caractérisé par**
ledit signal de détection étant un signal sonore dans la plage des fréquences audibles, en dessous du seuil masqué d'audition, dû au masquage par le son de l'environnement général et par
une unité de détermination de masquage permettant de déterminer le seuil masqué d'audition pour ledit signal de détection sur la base de la détection dudit son de l'environnement général.

**2.** Système de poursuite selon la revendication 1, dans lequel ladite unité de traitement (430) est en outre conçue pour déterminer au moins un paramètre de position (x ; y ; z) dudit casque d'écoute (450) sur la base d'une mesure de la durée de la transmission entre ledit dispositif de transmission (410) et ledit dispositif de détection (420).

**3.** Système de poursuite selon la revendication 1 ou 2, dans lequel ledit générateur de signal (400) est un processeur de signal numérique.

**4.** Système de poursuite selon l'une quelconque des revendications 1 à 3, dans lequel ledit dispositif de transmission (410) inclut un émetteur unique.

**5.** Système de poursuite selon l'une quelconque des revendications 1 à 3, dans lequel ledit dispositif de transmission (410) inclut une pluralité d'émetteurs (410a, 410b, 410c) placés à des positions différentes.

**6.** Système de poursuite selon l'une quelconque des revendications 1 à 5, dans lequel ledit dispositif de transmission (410) inclut au moins un haut-parleur.

**7.** Système de poursuite selon la revendication 6, dans lequel ledit haut-parleur émet en outre un signal sonore audible.

**8.** Système de poursuite selon la revendication 7, dans lequel ledit son de l'environnement général inclut ledit signal sonore audible émis par ledit haut-parleur.

**9.** Système de poursuite selon l'une quelconque des revendications 1 à 8, dans lequel ledit dispositif de détection (420) inclut un détecteur unique.

**10.** Système de poursuite selon l'une quelconque des revendications 1 à 8, dans lequel ledit dispositif de détection (420) inclut une pluralité de détecteurs (420a, 420b, 420c) placés à des positions différentes.

**11.** Système de poursuite selon l'une quelconque des revendications 1 à 10, dans lequel ledit dispositif de détection (420) inclut au moins un microphone.

**12.** Système de poursuite selon l'une quelconque des revendications 1 à 11, dans lequel ladite unité de traitement (430) est conçue pour déterminer un paramètre d'orientation ($\alpha$) sur la base d'une mesure de la durée de la transmission et d'une valeur préréglée de la vitesse du son.

**13.** Système de poursuite selon l'une quelconque des revendications 1 à 11, incluant un émetteur ou un détecteur supplémentaire permettant de déterminer la valeur actuelle de la vitesse du son.

**14.** Système de poursuite selon la revendication 13, dans lequel ledit dispositif de transmission (410) inclut trois émetteurs (410a, 410b, 410c) formant un agencement triangulaire prédéfini, et où ledit dispositif de détection (420) inclut trois détecteurs (420a, 420b, 420c) formant un agencement triangulaire prédéfini, et ladite unité de traitement (430) est conçue pour déterminer la valeur actuelle de la vitesse du son et pour déterminer complètement l'orientation et la position dudit casque d'écoute (450) sur la base de mesures de la durée de la transmission entre lesdits émetteurs et détecteurs.

**15.** Système de poursuite selon l'une quelconque des revendications 1 à 13, dans lequel ladite unité de traitement (430) est conçue pour déterminer un paramètre unique d'orientation ($\alpha$), en supposant que ledit casque d'écoute (450) ne présente qu'un seul degré de liberté de mouvement décrit par ledit paramètre unique d'orientation ($\alpha$).

**16.** Système de poursuite selon la revendication 15, dans lequel ledit paramètre unique d'orientation ($\alpha$) est un angle de rotation autour de l'axe vertical dudit casque d'écoute (450).

**17.** Système de poursuite selon l'une quelconque des revendications 1 à 16, dans lequel ledit signal de détection est un signal sonore présentant un niveau sonore se situant en dessous du seuil absolu (100) d'écoute.

**18.** Système de poursuite selon la revendication 17, dans lequel ledit signal de détection est un signal sonore se trouvant dans la plage de fréquences comprise entre 20 Hz et 16 kHz.

**19.** Système de poursuite selon la revendication 18, dans lequel ledit signal de détection est un signal sonore se trouvant dans la plage de fréquences comprise entre 100 Hz et 1 kHz.

**20.** Système de poursuite selon la revendication 18, dans lequel ledit signal de détection est un signal sonore se trouvant dans la plage de fréquences située au-dessus de 10 kHz.

**21.** Système de poursuite selon l'une quelconque des revendications 1 à 20, dans lequel ladite unité de détermination de masquage est conçue pour déterminer le niveau sonore et/ou la fréquence dudit signal de détection sur la base dudit seuil masqué déterminé d'écoute.

**22.** Système de poursuite selon l'une quelconque des revendications 1 à 21, dans lequel ledit son de l'environnement général inclut du bruit qui se produit dans un environnement bruyant.

**23.** Système de poursuite selon l'une quelconque des revendications 1 à 22, dans lequel ledit générateur de signal (400) est conçu pour générer une pluralité de signaux de détection en vue de mesures de la durée de la transmission entre ledit dispositif de transmission (410) et ledit dispositif de détection, ladite pluralité de signaux de détection étant des signaux sonores non audibles se trouvant dans la plage des fréquences audibles.

**24.** Système de divertissement et d'informations pour véhicule comprenant :

un casque d'écoute (450) simulant une reproduction 3D de données audio, et
un système de poursuite (400, 410, 420, 430) conforme à l'une quelconque des revendications 1 à 23 permettant de déterminer un paramètre d'orientation ($\alpha$) dudit casque d'écoute (450).

**25.** Système de divertissement et d'informations pour véhicule selon la revendication 24, comprenant en outre au moins un haut-parleur, dans lequel ledit haut-parleur est utilisé comme émetteur (410a, 410b) dudit dispositif de transmission (410).

**26.** Procédé de poursuite d'un casque d'écoute (450) simulant une reproduction de son 3D de données audio, le procédé comprenant les étapes consistant à :

générer un signal de détection,
transmettre ledit signal de détection depuis un dispositif de transmission (410) jusqu'à un dispositif de détection (420), dans lequel soit le dispositif de transmission (410), soit le dispositif de détection (420), est fixé sur ledit casque d'écoute (450) et où l'autre dudit dispositif de détection (420) et dudit dispositif de transmission (410) est situé à une position fixe,
détecter ledit signal de détection transmis au dit dispositif de détection (420), et
déterminer au moins un paramètre d'orientation ($\alpha$) dudit casque d'écoute (450) sur la base d'une mesure de la durée de la transmission dudit signal de détection entre ledit dispositif de transmission (410) et ledit dispositif de détection (420),
**caractérisé en ce que**
ledit signal de détection est un signal sonore dans la plage des fréquences audibles, en dessous du seuil masqué d'audition, dû au masquage par le son de l'environnement général, et **caractérisé par** l'étape consistant à
déterminer le seuil masqué d'audition pour ledit signal de détection sur la base de la détection dudit son de l'environnement général.

**27.** Procédé selon la revendication 26, comprenant en outre l'étape consistant à déterminer au moins un paramètre de position (x ; y ; z) dudit casque d'écoute (450) sur la base d'une mesure de la durée de la transmission entre ledit dispositif de transmission (410) et ledit dispositif de détection (420).

**28.** Procédé selon la revendication 26 ou 27, dans lequel ledit dispositif de transmission (410) inclut un émetteur unique.

**29.** Procédé selon la revendication 26 ou 27, dans lequel ledit dispositif de transmission (410) inclut une pluralité d'émetteurs (410a, 410b, 410c) placés à des positions différentes.

**30.** Procédé selon l'une quelconque des revendications 26 à 29, dans lequel ledit dispositif de transmission (410) inclut au moins un haut-parleur.

**31.** Procédé selon la revendication 30, dans lequel ledit haut-parleur émet en outre un signal sonore audible.

**32.** Procédé selon la revendication 31, dans lequel ledit son de l'environnement général inclut ledit signal sonore audible émis par ledit haut-parleur.

**33.** Procédé selon l'une quelconque des revendications 26 à 32, dans lequel ledit dispositif de détection (420) inclut un détecteur unique.

**34.** Procédé selon l'une quelconque des revendications 26 à 32, dans lequel ledit dispositif de détection (420) inclut une pluralité de détecteurs (420a, 420b, 420c) placés à des positions différentes.

**35.** Procédé selon l'une quelconque des revendications 26 à 34, dans lequel ledit dispositif de transmission (410) inclut au moins un microphone.

**36.** Procédé selon l'une quelconque des revendications 26 à 35, dans lequel ladite étape de détermination définit le paramètre d'orientation ($\alpha$) sur la base d'une mesure de la durée de la transmission et d'une valeur préréglée de la vitesse du son.

**37.** Procédé selon l'une quelconque des revendications 26 à 35, comprenant en outre l'étape consistant à déterminer la valeur actuelle de la vitesse du son en utilisant un émetteur ou un détecteur supplémentaire.

**38.** Procédé selon la revendication 37, déterminant complètement l'orientation et la position dudit objet mobile sur la base de mesures de la durée de la transmission entre trois émetteurs (410a, 410b, 410c), formant un agencement triangulaire prédéfini, inclus dans ledit dispositif de transmission (410) et trois détecteurs (420a, 420b, 420c) formant un agencement triangulaire prédéfini inclus dans ledit dispositif de détection (420).

**39.** Procédé selon l'une quelconque des revendications 26 à 37, déterminant un paramètre unique d'orientation ($\alpha$) et supposant que ledit casque d'écoute (450) ne présente qu'un seul degré de liberté de mouvement décrit par ledit paramètre unique d'orientation ($\alpha$).

**40.** Procédé selon la revendication 39, dans lequel ledit paramètre unique d'orientation ($\alpha$) représente un angle de rotation autour de l'axe vertical dudit casque d'écoute (450).

**41.** Procédé selon l'une quelconque des revendications 26 à 40, dans lequel ledit signal de détection est un signal sonore présentant un niveau sonore se situant en dessous du seuil absolu d'écoute (100).

**42.** Procédé selon la revendication 41, dans lequel ledit signal de détection est un signal sonore se trouvant dans la plage de fréquences comprise entre 20 Hz et 16 kHz.

**43.** Procédé selon la revendication 42, dans lequel ledit signal de détection est un signal sonore se trouvant dans la plage de fréquences comprise entre 100 Hz et 1 kHz.

**44.** Procédé selon la revendication 42, dans lequel ledit signal de détection est un signal sonore se trouvant dans la plage de fréquences située au-dessus de 10 kHz.

**45.** Procédé selon la revendication 26, comprenant en outre l'étape consistant à déterminer un niveau sonore et/ou une fréquence dudit signal de détection sur la base dudit seuil masqué déterminé d'écoute.

**46.** Procédé selon l'une quelconque des revendications 26 à 45, dans lequel ledit son de l'environnement général inclut du bruit qui se produit dans un environnement bruyant.

**47.** Procédé selon l'une quelconque des revendications 26 à 46, dans lequel ladite étape de génération génère une pluralité de signaux de détection en vue de mesures de la durée de la transmission entre ledit dispositif de transmission (410) et ledit dispositif de détection (420), ladite pluralité de signaux de détection étant des signaux sonores non audibles situés dans la plage des fréquences audibles.

FIG. 1

FIG. 2A

FIG. 2B

FIG. 2C

FIG. 2D

FIG. 3

FIG. 4

FIG. 5

FIG. 6

FIG. 7

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1359437 A1
- EP 1176848 A2
- WO 9207346 A
- WO 2005032209 A
- US 5495534 A

**Non-patent literature cited in the description**

- **E. ZWICKER ; M. ZOLLNER.** Elektroakustik. Springer-Verlag, 1984
- **E. ZWICKER.** Psychoakustik. Springer-Verlag, 1982